# EUROPEAN PATENT SPECIFICATION

(11) **EP 4 457 554 B1**
(45) Date of publication and mention of the grant of the patent: **28.10.2026**
(21) Application number: 22854678.4
(22) Date of filing: 30.12.2022
(51) Int. Cl.: G02B 6/44

(54) **OPTICAL FIBER DISTRIBUTION DEVICE WITH IDENTIFIERS**
GLASFASERVERTEILUNGSVORRICHTUNG MIT IDENTIFIKATOREN
DISPOSITIF DE DISTRIBUTION DE FIBRE OPTIQUE AVEC IDENTIFIANTS

(30) Priority: 31.12.2021 US 202163295649 P
(43) Date of publication of application: 06.11.2024
(73) Proprietor: PPC Broadband, Inc., East Syracuse, NY 13057 (US)
(72) Inventor: ERIKSEN, Kim, Lundgren, 4733 Tappernøje (DK)
(74) Representative: Dragotti & Associati S.P.A.
(86) International application number: PCT/US2022/054374
(87) International publication number: WO 2023/129734

(56) References cited:
- EP-A1- 3 258 302
- EP-A1- 3 855 222
- US-A1- 2012 301 098

## Description

### CROSS REFERENCE TO RELATED APPLICATION

This application claims the benefit of U.S. Provisional Application No. 63/295,649, filed December 31, 2021.

### BACKGROUND

The present invention relates generally to an optical fiber distribution device. More particularly, the present invention relates to a splice cassette holder with a plurality of splice cassettes, wherein each of the splice cassettes is configured to retain a splice cassette tray with identifiers or designators for identifying fibers associated with each of the splice cassette trays.

Fiber optic cables or other cables are often used as a medium for telecommunication and computer networking. A fiber distribution assembly or device may be a splice cassette assembly or device is often used to organize and manage fiber optic cables or connections within telecommunication wiring enclosures. An example splice cassette assembly or device may include a plurality of splice cassettes (also sometimes referred to as fiber optic cassettes).

The splice cassettes are configured to allow the routing of fiber optic cables within the splice cassettes such that individual optical fibers (or optical fiber cables) may be spliced to other optical fibers to make a desired connection. The splice cassette device may include external connectors for connection to the individual spliced optical fibers. A typical splice cassette device may include areas to segregate the spliced fibers. The cassettes may include a large number of spliced optical fibers, and each splice cassette assembly may include a large number of splice cassettes, which may make it difficult to locate specific optical fibers for connection or disconnection such as by splicing.

It may be desirable to provide a splice cassette and/or a splice cassette device or assembly that overcomes one or more of the aforementioned disadvantages of typical splice cassette devices. That is, it may be desirable to provide a splice cassette having visual identification of optical fiber within the splice cassettes of a splice cassette device or assembly.

EP 3 855 222 A discloses an optical fiber distribution device comprising a splice cassette including a portion to retain a plurality of splices. Markers are positioned next to the splice retaining portion. The markers may carry a combination of different identifiers, including colours, letters, numbers, or patterns. EP 3 258 302 A discloses an optical fiber distribution device comprising a splice cassette including a tray portion to retain a plurality of splices. The tray portion is removable from the splice cassette.

### SUMMARY

In accordance with various embodiments of the present disclosure, an optical fiber distribution device provides a visual identification of fiber optic cables associated with splice cassette portions. The device includes a splice cassette portion having a splice cassette tray receiving portion, a splice cassette tray portion configured to be received by the splice cassette tray receiving portion, and configured to be removed from the splice cassette portion, wherein the splice cassette tray portion includes a splice retaining portion that is configured to retain a spliced portion of a fiber optic cable, wherein the splice cassette tray portion includes a first splice cassette tray portion identifier that is configured to provide a first visual identification of a fiber optic cable that is spliced and retained at the splice cassette tray portion, and wherein the splice cassette tray portion includes a second splice cassette tray portion identifier that is configured to provide a second visual identification different from the first visual identification of the fiber optic cable that is spliced and retained at the splice cassette tray.

Various aspects of the splice cassette assembly, as well as other embodiments, objects, features and advantages of this disclosure, will be apparent from the following detailed description of illustrative embodiments thereof, which is to be read in conjunction with the accompanying drawings.

### BRIEF DESCRIPTION OF THE DRAWINGS

FIG. 1 is a perspective view of a splice cassette assembly in accordance with disclosed aspects.
FIG. 2 is a perspective view of a splice cassette and a splice cassette tray in accordance with disclosed aspects.
FIG. 3 is a perspective view of a splice cassette and a splice cassette tray in accordance with disclosed aspects.
FIG. 4 is a perspective view of a splice cassette and a splice cassette tray in accordance with disclosed aspects.
FIG. 5 is a partial perspective rear view of a splice cassette and a splice cassette tray in accordance with disclosed aspects.
FIG. 6 is a perspective review of a splice cassette and a splice cassette tray in accordance with disclosed aspects.
FIG. 7 is a perspective review of a splice cassette and a splice cassette tray in accordance with disclosed aspects.

### DETAILED DESCRIPTION OF EMBODIMENTS

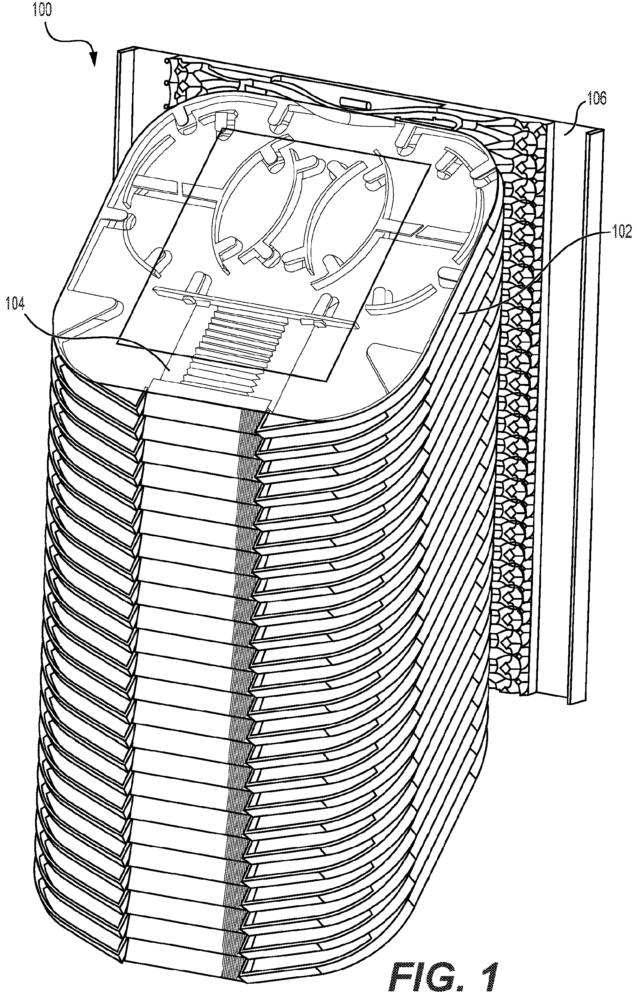

Referring first to FIG. 1, an optical fiber distribution device or assembly. In some embodiments, the optical fiber distribution device may be a splice cassette device or splice cassette portion 100. The splice cassette device 100 is configured to contain one or a plurality of splice cassettes or splice cassette portions 102. FIG. 1 illustrates the splice cassette device 100 with twenty-four splice cassettes 102, although any number of splice cassettes 102 could be used. The splice cassettes 102 may be mounted to the panel or base portion 106. The splice cassette device 100 is configured to receive optical fiber cables containing optical fibers from a panel or panels 106, (also referred to as base portion 106) although the panel could be omitted. Each optical fiber cable or individual optical fiber may be spliced to other optical fibers, and the other end of the spliced optical fibers may be routed to an area outside of the splice cassette device 100. In some embodiments, the optical fibers may be fibers from a multi-fiber distribution cable. Such a multi-fiber distribution cable may include a plurality of fibers, wherein each fiber comprises a different color relative to the other fibers of the distribution cable.

The splice cassettes 102 may be mounted to the panel or base portion 106. In some embodiments, the splice cassettes 102 may be mounted to the base portion 106 in a stacked configuration. In such a stacked configuration, only a front- end portion of the splice cassettes 102 may be visible (except for a top splice cassette 102) due to the overlapping of the splice cassettes 102. In some embodiments, the splice cassettes 102 may be removable from the base portion 106 and may be mounted to the base portion 106 in a pivotable manner.

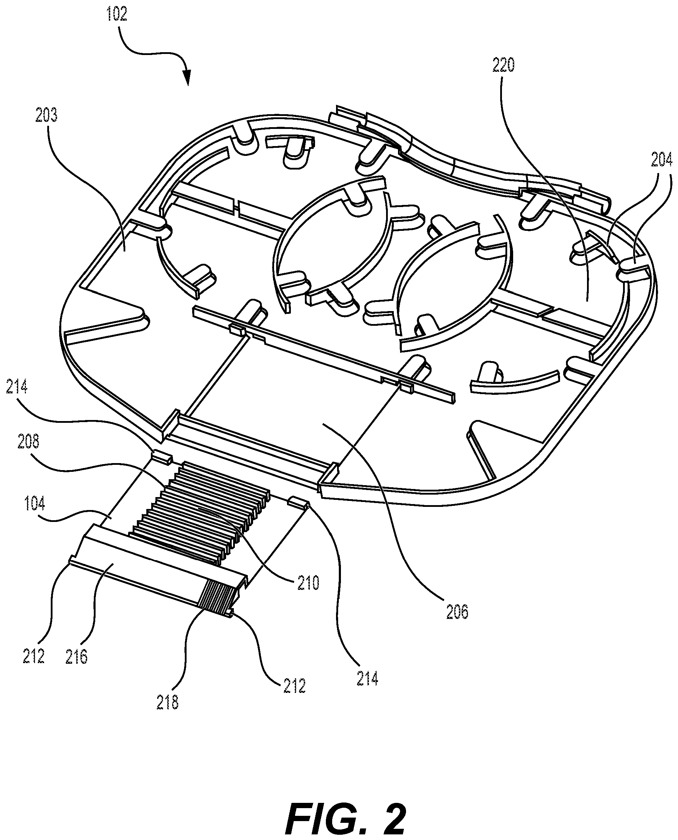

As illustrated in FIG. 2, each of the splice cassettes 102 may include a splice cassette body or splice cassette body portion 203, and a splice cassette tray receiving portion 206 configured to receive a splice cassette tray 104. The splice cassette 102 may also include a fiber management portion 204 for retaining fiber optical cables (not shown) at various positions within the splice cassette 102. The splice cassette tray 104 may also include splice retaining portions 208, which are further described herein. According to the claimed invention, the splice cassette tray 104 can be removed from the receiving portion 206.

Each of the splice cassette tray 104 is interchangeable with other splice cassette trays 104 and each of the splice cassette trays 104 may be placed within any of the splice cassettes 102. The splice cassette tray 104 includes one or more splice retaining portions 208 configured to retain a splice of fiber optic cables. In some embodiments, the splice retaining portions may be configured as a plurality of parallel walls 208, with a splice receiving space 210 between each adjacent pair of walls 208. The splice receiving space 210 may be configured with a width to receive and retain a spliced fiber optic cable or fiber optic wire between adjacent ones of the walls 208. Thirteen walls 208 are illustrated in the figures herein in the splice cassette tray 104, although other numbers of walls 208 may be used in various embodiments. Additionally, structure other than the parallel walls and splice receiving space 210 may be used as the splice retaining portions 208.

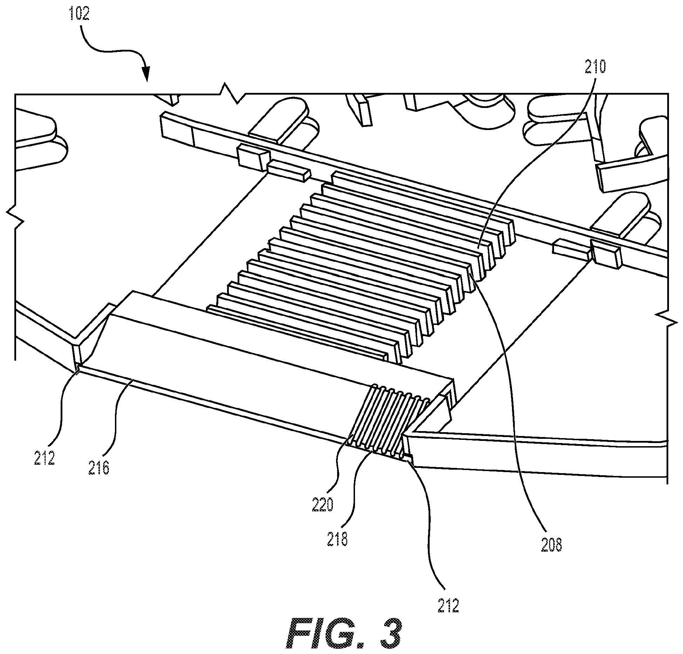

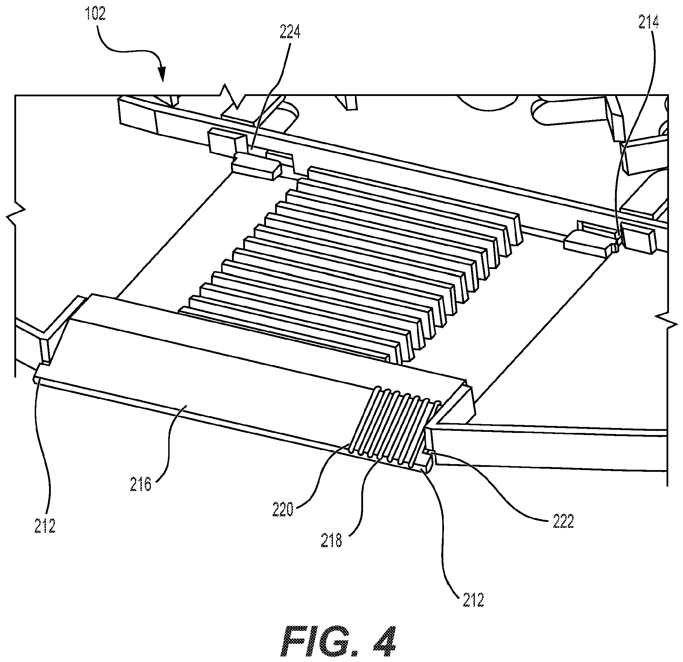

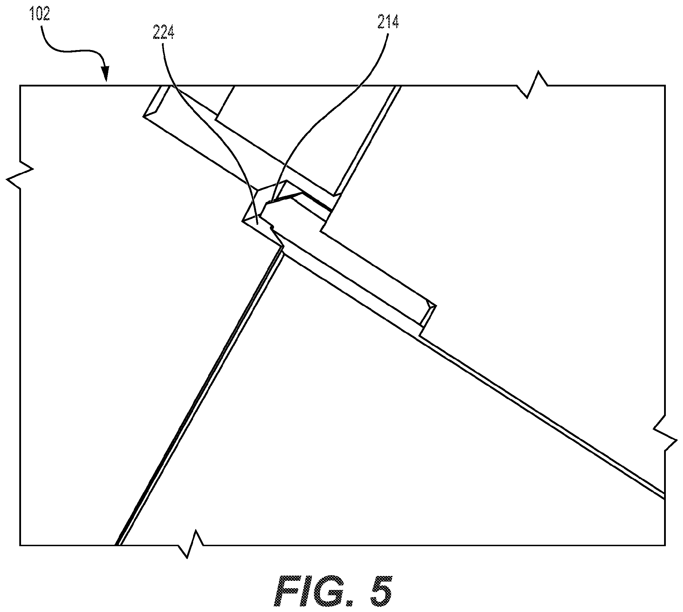

In some embodiments, each splice cassette tray 104 is configured with retaining portions for retaining the splice cassette tray 104 in the splice cassette 102, as illustrated in FIGS. 2-5. The retaining portions of the splice cassette tray 104 may include first projections 212 protruding from front lower side portions of the splice cassette tray 104 and second projections 214 protruding from rear upper side portions of the splice cassette tray 104. Other retaining portions for retaining the splice cassette tray 104 in the splice cassette 102 may be used with the disclosed embodiments.

In some embodiments, the splice cassette 102 may be configured with front indentations or receiving portions 222 which are configured to receive the first projections 212 of the splice cassette tray 104. In some embodiments, the splice cassette 102 is also configured with rear indentations or receiving portions 224 which are configured to receive the second projections 214 of the splice cassette tray 104. Retaining portions other than those shown here could be utilized with the splice cassette assembly 100 in accordance with various embodiments.

In some embodiments, the splice cassette tray 104 includes a front surface 216 that may be disposed at an inclined angle with respect to a top or front surface of the splice cassette device 102. The inclined angle is configured to increase a surface area of the front surface 216 of the splice cassette tray 104. The increased surface area of the front surface 216 of the splice cassette tray 104 allows additional information to be displayed on the front surface 216, as a third identifier for identification purposes of the splice cassette tray 104 or other identification, such as which fiber optic cables are disposed therein, where the fiber optic cables are connected to, services that are provided by the spliced fiber optic cable, any combination of such identification, etc.

In some embodiments, the splice cassette trays 104 may each have one of a plurality of different colors to present visual identification as a visual color identifier or designator. For example, the splice cassette trays 104 may be blue, red, yellow, green, brown, etc. The color identifier can be used to distinguish the splice cassette trays 104 from each other as a splice cassette tray identifier, or to differentiate which splice cassette trays 104 have particular fiber optical cables disposed therein. Thus, the color identifier may be configured as a splice cassette tray identifier, or as a fiber optic cable identifier, or both. For example, a blue splice cassette tray may be used to indicate that the blue cassette tray has a blue fiber optic cable disposed therein. In such embodiments, the blue fiber optic cable may include a blue designator on the fiber optic cable. In some embodiments, the splice cassette trays 104 may additionally or in place of the color identifier include symbols, abbreviations, and/or other alpha/numeric identifiers. For example, instead of a color identifier or designator, the splice cassette tray 104 could include a numeric, alpha numeric or other identifier instead of the color identifier. In these embodiments, the fiber optic cable within the splice cassette tray 104 may also include a corresponding numeric, alpha numeric or other identifier or designator.

In some embodiments, the tray colors can correspond to matching fiber cable color. Or alternatively, the colors may not match, but each color tray can still be used as the first identifier for a particular colored cable and the second identifier can be used to identify a second colored cable having the same color.

Additionally, in some embodiments, the splice cassette trays 104 may include a second visual indicator or designator, such as, for example, grooves or groove portions 218. The grooves 218 may be configured to act as a second splice cassette tray identifier or designator when the colors (or first identifiers) of the splice cassette trays may repeat on more than one of the splice cassettes 104. For example, in FIG. 1 there may be three different brown splice cassette trays 104, three different blue splice cassette trays 104, three different red splice cassette trays 104, and four different yellow splice cassette trays 104 within one optical fiber distribution device 100. The grooves 218 may be marked with an indicator or designator 220 as a second identifier, such as a stripe or other visual identifier, to visually distinguish the splice cassette trays having a same first identifier from each other. The indicator 220 may be a second splice cassette tray identifier.

In some embodiments, the second indicator 220 may be used to differentiate between splice cassette trays 104 of the same color or having a same first identifier or designator. For example, with three splice cassette trays having a brown color as a first splice cassette tray identifier and/or a first fiber optic cable identifier, each of the brown splice cassette trays may be marked with a different second indicator or designator 220, to differentiate between the different brown splice cassette trays. This may be accomplished with the indicators being stripes with one stripe, two stripes, and three stripes on the different brown splice cassette trays 102, for example. The second splice cassette tray identifier may be embodied in structure other than the grooves and stripes, such as tabs, text that can be added, a number of holes in the grooves that can be created, etc.

In some embodiments, the splice cassette trays 104 may be configured to be inserted into the splice cassette 102 and retained therein using the retaining elements. According to the claimed invention, the splice cassette trays 104 are removable from the splice cassettes 102. For example, in some embodiments the first and second protrusions 212, 214 may be provided with some degree of flexibility, so that the protrusions 212, 214 may be able to move inwardly when an amount of force is applied to insert the splice cassette trays 104 into the splice cassettes 102, and to move outwardly when an amount of force is applied to remove the splice cassette trays 104 from the splice cassettes 102 Any other methods and structures of making the splice cassette trays removeable from the splice cassettes 102 may be utilized with the disclosed embodiments.

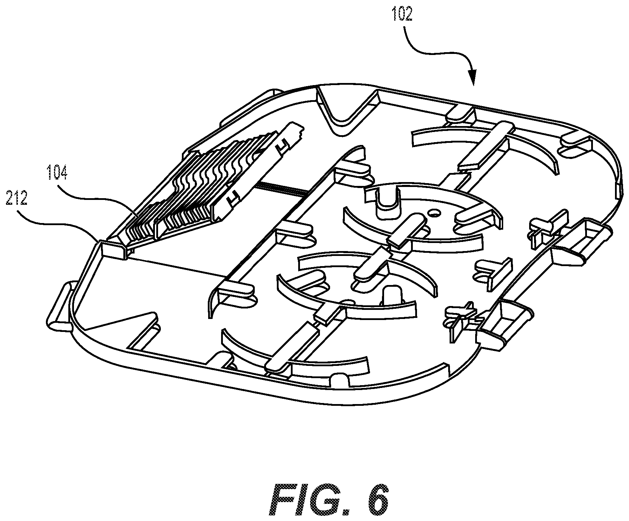

As illustrated in FIG. 6, in some embodiments, the splice cassette tray 104 may be rotated upwards around the connections of the first projections 212 to the splice cassette 102.

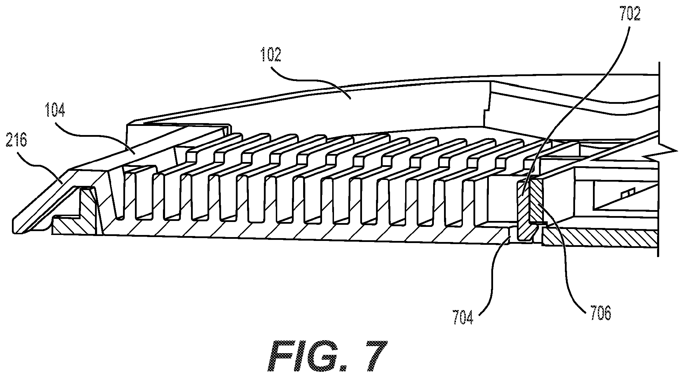

As illustrated in FIG. 7, in some embodiments, the splice cassette tray 104 may include alternate structure for retaining the splice cassette tray in a down or closed position. In particular, the splice cassette 102 may include projections 702 configured to be received within a receiving portion on the splice cassette tray 104, where the receiving portion is formed as a groove between a front wall 704 and a rear wall 706. Other configurations to make the splice cassette tray 104 removeable and/or pivotable with respect to the splice cassette 102 are within the scope of the various embodiments.

Although the illustrative embodiments of the present invention have been described herein with reference to the accompanying drawings, it is to be understood that the invention is not limited to those precise embodiments, and that various other changes and modifications may be affected therein by one skilled in the art without departing from the scope of the invention.

Various changes to the foregoing described and shown structures will now be evident to those skilled in the art. Accordingly, the particularly disclosed scope of the invention is set forth in the following claims.

## Claims

1. An optical fiber distribution device (100) that provides a visual identification of fiber optic cables associated with splice cassette portions comprising:
a splice cassette portion (102) having a splice cassette tray portion receiving portion (206);
a splice cassette tray portion (104) configured to be received by the splice cassette tray portion receiving portion (206);
wherein the splice cassette tray portion (104) is configured to be removed from the splice cassette portion (102);
wherein the splice cassette tray portion (104) includes a splice retaining portion (208) that is configured to retain a spliced portion of a fiber optic cable;
wherein the splice cassette tray portion (104) includes a first splice cassette tray portion identifier that is configured to provide a first visual identification of a fiber optic cable that is spliced and retained at the splice cassette tray portion (104); and
wherein the splice cassette tray portion (104) includes a second splice cassette tray portion identifier that is configured to provide a second visual identification different from the first visual identification of the fiber optic cable that is spliced and retained at the splice cassette tray portion (104).

2. The device of claim 1, wherein the first splice cassette tray portion identifier is configured as a color of the splice cassette tray portion (104).

3. The device of claim 1, wherein the first splice cassette tray portion identifier is configured as a textual, numeric, or alphanumeric identifier.

4. The device of any of claims 1 to 3, wherein the second splice cassette tray portion identifier is configured as one or more marked stripes to visually distinguish between splice cassette tray portions (104) having a same first splice cassette tray portion identifier.

5. The device of any of claims 1 to 3, wherein the second splice cassette tray portion identifier is configured as a series of selectable tabs, text, or a number of holes on the inclined front surface of the splice cassette tray portion (104).

6. The device of any of claims 1 to 5, wherein the splice cassette tray portion (104) is configured to include a front surface portion (216) that is inclined relative to an adjacent front surface portion of the body portion so as to provide the front surface portion of the splice cassette portion (102) with an increased surface area relative to the adjacent front surface portion of the body portion.

7. The device of claim 6, wherein the splice cassette tray portion (104) includes a third splice cassette tray portion identifier, and the third splice cassette tray portion identifier is configured to visually identify at least one of a designation of the fiber optic cables disposed within the splice cassette, an external location of a connection of the fiber optic cables, or services that are provided by the fiber optic cables.

8. The device of claim 7, wherein the third splice cassette tray portion identifier is configured to visually identify at least one of a designation of the fiber optic cables disposed within the splice cassette portion (102), an external location of a connection of the fiber optic cables, or services that are provided by the fiber optic cables.

9. The device of any of claims 1 to 8, wherein the splice retaining portion comprises a plurality of walls (208) that are each separated by a splice receiving space (210).

## Patentansprüche

1. Glasfaserverteilungsvorrichtung (100), die eine visuelle Identifizierung von Glasfaserkabeln ermöglicht, die mit Spleißkassettenabschnitten verbunden sind, umfassend:
einen Spleißkassettenabschnitt (102) mit einem Aufnahmeabschnitt (206) für einen Spleißkassetteneinschubabschnitt,
einen Spleißkassetteneinschubabschnitt (104), der konfiguriert ist, um von dem Aufnahmeabschnitt für den Spleißkassetteneinschubabschnitt (206) aufgenommen zu werden;
wobei der Spleißkassetteneinschubabschnitt (104) konfiguriert ist, um aus dem Spleißkassettenabschnitt (102) entnommen zu werden;
wobei der Spleißkassetteneinschubabschnitt (104) einen Spleißhalteabschnitt (208) einschließt, der konfiguriert ist, um einen gespleißten Abschnitt eines Glasfaserkabels zu halten;
wobei der Spleißkassetteneinschubabschnitt (104) eine erste Kennzeichnung des Spleißkassetteneinschubabschnitts einschließt, die konfiguriert ist, um eine erste visuelle Identifizierung eines Glasfaserkabels bereitzustellen, das am Spleißkassetteneinschubabschnitt (104) gespleißt und gehalten wird; und
wobei der Spleißkassetteneinschubabschnitt (104) eine zweite Kennzeichnung des Spleißkassetteneinschubabschnitts einschließt, die konfiguriert ist, um eine zweite visuelle Identifizierung bereitzustellen, die sich von der ersten visuellen Identifizierung des Glasfaserkabels unterscheidet, das am Spleißkassetteneinschubabschnitt (104) gespleißt und gehalten wird.

2. Vorrichtung nach Anspruch 1, wobei die erste Kennzeichnung des Spleißkassetteneinschubabschnitts als Farbe des Spleißkassetteneinschubabschnitts (104) konfiguriert ist.

3. Vorrichtung nach Anspruch 1, wobei die erste Kennzeichnung des Spleißkassetteneinschubabschnitts als textuelle, numerische oder alphanumerische Kennzeichnung konfiguriert ist.

4. Vorrichtung nach einem der Ansprüche 1 bis 3, wobei die zweite Kennzeichnung des Spleißkassetteneinschubabschnitts als ein oder mehrere markierte Streifen konfiguriert ist, um Spleißkassetteneinschubabschnitte (104) mit derselben ersten Kennzeichnung des Spleißkassetteneinschubabschnitts optisch voneinander zu unterscheiden.

5. Vorrichtung nach einem der Ansprüche 1 bis 3, wobei die zweite Kennzeichnung des Spleißkassetteneinschubabschnitts als eine Reihe von auswählbaren Laschen, Text oder einer Anzahl von Löchern auf der geneigten vorderen Oberfläche des Spleißkassetteneinschubabschnitts (104) konfiguriert ist.

6. Vorrichtung nach einem der Ansprüche 1 bis 5, wobei der Spleißkassetteneinschubabschnitt (104) konfiguriert ist, um einen vorderen Oberflächenabschnitt (216) einzuschließen, der relativ zu einem angrenzenden vorderen Oberflächenabschnitt des Körperabschnitts geneigt ist, um dem vorderen Oberflächenabschnitt des Spleißkassettenabschnitts (102) einen gegenüber dem angrenzenden vorderen Oberflächenabschnitt des Körperabschnitts vergrößerten Oberflächenabschnitt zu verleihen.

7. Vorrichtung nach Anspruch 6, wobei der Spleißkassetteneinschubabschnitt (104) eine dritte Kennzeichnung des Spleißkassetteneinschubabschnitts einschließt und die dritte Kennzeichnung des Spleißkassetteneinschubabschnitts konfiguriert ist, um mindestens eine der Bezeichnungen der in der Spleißkassette angeordneten Glasfaserkabel, eine externe Position einer Verbindung der Glasfaserkabel oder Dienste, die von den Glasfaserkabeln bereitgestellt werden, visuell zu identifizieren.

8. Vorrichtung nach Anspruch 7, wobei die dritte Kennzeichnung des Spleißkassetteneinschubabschnitts konfiguriert ist, um mindestens eine der Bezeichnungen der im Spleißkassettenabschnitt (102) angeordneten Glasfaserkabel, eine externe Position einer Verbindung der Glasfaserkabel oder Dienste, die von den Glasfaserkabeln bereitgestellt werden, visuell zu identifizieren.

9. Vorrichtung nach einem der Ansprüche 1 bis 8, wobei der Spleißhalteabschnitt eine Vielzahl von Wänden (208) umfasst, die jeweils durch einen Spleißaufnahmeraum (210) voneinander getrennt sind.

## Revendications

1. Dispositif de distribution de fibres optiques (100) qui fournit une identification visuelle de câbles à fibres optiques associés à des parties cassette d'épissure, comprenant :
une partie cassette d'épissure (102) ayant une partie de réception de partie plateau de cassette d'épissure (206), une partie plateau de cassette d'épissure (104) conçue pour être reçue par la partie de réception de partie plateau de cassette d'épissure (206) ;
dans lequel la partie plateau de cassette d'épissure (104) est conçue pour être retirée de la partie cassette d'épissure (102) ;
dans lequel la partie plateau de cassette d'épissure (104) comporte une partie de retenue d'épissure (208) qui est conçue pour retenir une partie épissée d'un câble à fibres optiques ;
dans lequel la partie plateau de cassette d'épissure (104) comporte un premier identificateur de partie plateau de cassette d'épissure configuré pour fournir une première identification visuelle d'un câble à fibres optiques qui est épissé et retenu au niveau de la partie plateau de cassette d'épissure (104) ; et
dans lequel la partie plateau de cassette d'épissure (104) comporte un deuxième identificateur de partie plateau de cassette d'épissure qui est configuré pour fournir une seconde identification visuelle différente de la première identification visuelle du câble à fibres optiques qui est épissé et retenu au niveau de la partie plateau de cassette d'épissure (104).

2. Dispositif selon la revendication 1, dans lequel le premier identificateur de partie plateau de cassette d'épissure est configuré sous la forme d'une couleur de la partie plateau de cassette d'épissure (104).

3. Dispositif selon la revendication 1, dans lequel le premier identificateur de partie plateau de cassette d'épissure est configuré sous la forme d'un identificateur textuel, numérique ou alphanumérique.

4. Dispositif selon l'une quelconque des revendications 1 à 3, dans lequel le deuxième identificateur de partie plateau de cassette d'épissure est configuré sous la forme d'une ou plusieurs bandes marquées pour distinguer visuellement les parties plateau de cassette d'épissure (104) ayant un même premier identificateur de partie plateau de cassette d'épissure.

5. Dispositif selon l'une quelconque des revendications 1 à 3, dans lequel le deuxième identificateur de partie plateau de cassette d'épissure est configuré sous la forme d'une série d'onglets sélectionnables, de texte ou d'un certain nombre de trous sur la surface avant inclinée de la partie plateau de cassette d'épissure (104).

6. Dispositif selon l'une quelconque des revendications 1 à 5, dans lequel la partie plateau de cassette d'épissure (104) est conçue pour comporter une partie de surface avant (216) qui est inclinée par rapport à une partie de surface avant adjacente de la partie corps de manière à fournir à la partie de surface avant de la partie cassette d'épissure (102) une surface accrue par rapport à la partie de surface avant adjacente de la partie corps.

7. Dispositif selon la revendication 6, dans lequel la partie plateau de cassette d'épissure (104) comporte un troisième identificateur de partie plateau de cassette d'épissure, et le troisième identificateur de partie plateau de cassette d'épissure est configuré pour identifier visuellement au moins l'un parmi une désignation des câbles à fibres optiques disposés à l'intérieur de la cassette d'épissure, un emplacement externe d'une connexion des câbles à fibres optiques, ou des services qui sont fournis par les câbles à fibres optiques.

8. Dispositif selon la revendication 7, dans lequel le troisième identificateur de partie plateau de cassette d'épissure est configuré pour identifier visuellement au moins l'un parmi une désignation des câbles à fibres optiques disposés à l'intérieur de la partie cassette d'épissure (102), un emplacement externe d'une connexion des câbles à fibres optiques, ou des services qui sont fournis par les câbles à fibres optiques.

9. Dispositif selon l'une quelconque des revendications 1 à 8, dans lequel la partie de retenue d'épissure comprend une pluralité de parois (208) qui sont chacune séparées par un espace de réception d'épissure (210).
